# EUROPÄISCHE PATENTSCHRIFT

(11) **EP 1 615 709 B1**
(45) Veröffentlichungstag und Bekanntmachung des Hinweises auf die Patenterteilung: **07.02.2007**
(21) Anmeldenummer: 04729024.2
(22) Anmeldetag: 23.04.2004
(51) Int. Cl.: B01D 33/06, B01D 33/44, B01D 35/12, B01D 36/02

(54) **FILTEREINRICHTUNG UND VERFAHREN ZUR PERIODISCHEN REINIGUNG EINES FILTERS**
FILTER DEVICE AND METHOD FOR THE PERIODIC CLEANING OF A FILTER
DISPOSITIF FILTRANT ET PROCEDE POUR LE NETTOYAGE PERIODIQUE D'UN FILTRE

(30) Priorität: 24.04.2003 EP 03405289
(43) Veröffentlichungstag der Anmeldung: 18.01.2006
(73) Patentinhaber: UTISOL Technologies AG, 6304 Zug (CH)
(72) Erfinder: HARMS, Eberhard, 96524 Muppert (DE); GRIGO, Mark, 59494 Soest (DE)
(74) Vertreter: Frei Patent Attorneys
(86) Internationale Anmeldenummer: PCT/CH2004/000247
(87) Internationale Veröffentlichungsnummer: WO 2004/094034

(56) Entgegenhaltungen:
- DE-A- 2 261 203
- DE-A- 19 537 578
- DE-B- 1 198 751
- DE-C- 568 537
- US-A- 4 123 362

## Beschreibung

Die Erfindung bezieht sich auf das Gebiet der Filtertechnik, insbesondere auf eine Filtereinrichtung und ein Verfahren zur periodischen Reinigung eines Filters einer Wasseraufbereitungs- oder Abwasserreinigungsanlage gemäss dem Oberbegriff der Patentansprüche 1 und 10.

### STAND DER TECHNIK

In Filteranlagen für Abwasser oder Trinkwasser werden stehende oder rotierend angeordnete Filterscheiben oder -Lamellen verwendet, die typischerweise mit Membranfiltern bestückt sind. Eine Vielzahl von Filterlamellen bildet eine Filtereinheit. Beispielsweise sind rechteckige Filterlamellen zu quaderförmigen Filtereinheiten verbunden, oder sind trapez- oder kreissegmentförmige Filterlamellen zu einer zylindrischen Anordnung zusammengestellt. In EP-B-1 149 619 ist eine Filtereinrichtung offenbart, in welcher aus segmentförmigen Filterlamellen Stapel gebildet sind, und diese Stapel wiederum zu einem im wesentlichen zylindrischen Rotationsfilter verbunden sind. Das Rotationsfilter wird in einem Becken mit dem zu reinigendem Wasser eingetaucht betrieben, beispielsweise in einem Belebungsbecken mit Abwasser. Trotz verschiedener Vorkehrungen zur Verhinderung von Schmutzablagerungen an den Filtern ist eine periodische Reinigung von Filtereinheiten erforderlich. Dabei werden die Filtereinheiten, beispielsweise ein ganzes Rotationsfilter oder einzelne Segmente, mit Hebekranen aus dem Becken gehoben und in ein Reinigungsbecken transportiert. Das Reinigungsbecken ist mit einer Reinigungslösung gefüllt, die eine chemische Reinigung der Filtermembranen bewirkt. Zudem findet eine grobmechanische manuelle Reinigung durch beispielsweise Abspritzen statt. Das beschriebene Vorgehen ist umständlich und zeitraubend.

DE 195 37 578 A1 beschreibt eine Einrichtung zur Reinigung von verschmutztem Wasser, in welcher mehrere Tuchfiltereinrichtungen jeweils in eigenen Kammern angeordnet sind. Die Kammern werden über eine gemeinsame Zulaufverteil-Kammer versorgt. Dies erlaubt einen einfachen Aufbau der Anlage.

DE 2 261 203 offenbart verschiedene Ausführungsformen von drehbaren Trommelfiltern mit senkrtechter oder waagrechter Drehachse. US 4,123,362 zeigt ein Rotationsfilter mit einer horizontalen Drehachse und einer zylindrischen Filterfläche, welches in einer eigenen Kammer angeordnet ist.

DE 568 537 und DE 1 198 751 zeigen Drehfilter, die in einem Becken angeordnet sind, welches der Kontur des Filters folgt. Gemäss der DE 568 537 wird jeweils ein Filterkuchen zwischen Filterplatten einzeln entfernt.

### DARSTELLUNG DER ERFINDUNG

Es ist deshalb Aufgabe der Erfindung, eine Filtereinrichtung und ein Verfahren zur periodischen Reinigung eines Filters einer Wasseraufbereitungs- oder Abwasserreinigungsanlage der eingangs genannten Art zu schaffen, welche die Nachteile des Standes der Technik beheben.

Diese Aufgabe lösen eine Filtereinrichtung und ein Verfahren zur periodischen Reinigung eines Filters einer Wasseraufbereitungs- oder Abwasserreinigungsanlage mit den Merkmalen der Patentansprüche 1 und 10.

In der erfindungsgemässen Filtereinrichtung ist also ein Rotationsfilter in einer eigenen Filterkammer angeordnet, deren Boden einer Kontur des Rotationsfilters folgend ausgebildet ist. Die Filterkammer ist abtrennbar mit einem weiteren Becken verbunden. Der Boden umschliesst also das Rotationsfilter, so dass das vom Boden umfasste Volumen wesentlich kleiner als bei einem üblichen, im wesentlichen quaderförmigen Beckenboden ist. Das kleinste Volumen wird erreicht, wenn der Boden die Form eines Hohlzylindersektors aufweist, vorzugsweise annähernd einem halben Hohlzylinder. Um die Montierbarkeit des Rotationsfilters zu gewährleisten ist ein Innenradius des Hohlzylinders zum Beispiel 5 bis 10% grösser als ein Aussenradius des rotationssymmetrischen Rotationsfilters.

Das Rotationsfilter ist in einer eigenen Filterkammer, also nicht im Hauptbecken respektive Haupt-Belebungsbecken einer Kläranlage angeordnet. Dadurch, dass eine eigene Filterkammer vorliegt, kann das Rotationsfilter in situ gereinigt werden, ohne dass andere Teile einer Filteranlage ausser Betrieb genommen werden müssen, und ohne dass das Rotationsfilter demontiert und aus der Filterkammer entfernt werden muss. Es werden also weder Hebekranen noch gesonderte Reinigungsbecken benötigt. Komplikationen durch das Lösen und wieder Anschliessen von Leitungen entfallen, ebenso das Positionieren beim Einbau der gereinigten Filter im Belebungsbecken in der laufenden Anlage. Ferner wird aufgrund der Form des Bodens der Filterkammer weniger Reinigungsflüssigkeit benötigt. Durch die Drehung des Rotationsfilters während der Reinigung wird noch weniger Reinigungsflüssigkeit benötigt, und ist auch das Rotationsfilter für eine manuelle Vor- oder Grobreinigung besser zugänglich.

Im Verfahren zur periodischen Reinigung der Filtereinrichtung, d.h. insbesondere des Rotationsfilters, wird das in der Filterkammer vorhandene Wasser abgelassen oder ausgepumpt, die Filterkammer bis etwas unter die Mitte des Rotationsfilters mit Reinigungsflüssigkeit gefüllt und eine chemische Reinigung unter Drehung des Rotationsfilters vorgenommen. Vorzugsweise wird zwischen dem Ablassen des Wassers und dem Einfüllen der Reinigungsflüssigkeit die mechanische Grobreinigung bei Drehung des Rotationsfilters durchgeführt.

In einer bevorzugten Ausführungsform der Erfindung ist die Filterkammer mit einem Hauptbecken, beispielsweise einem Belebungsbecken einer Wasseraufbereitungsanlage über eine Pumpe verbunden, ansonsten aber durch eine Trennwand baulich von dem Hauptbecken respektive anderen Becken der Anlage abgetrennt. Das Hauptbecken wie auch die Filterkammer und die Trennwand sind vorzugsweise gemauert und/oder betoniert. Die Pumpe pumpt Wasser durch eine Leitung und über einen ersten Überlauf, der über einem Betriebspegel der Filterkammer liegt, in die Filterkammer. Über einen zweiten Überlauf, der einen Betriebspegel der Filterkammer definiert, läuft das Wasser in das Hauptbecken zurück. Zur Entleerung der Filterkammer zur periodischen Reinigung muss also nur die Pumpe abgestellt werden und mittels beispielsweise einer Hilfspumpe und einem Schlauch und/oder über einen Ablauf die Filterkammer geleert werden. Ein Abtrennen der Filterkammer von anderen wasserführenden Teilen der Anlage geschieht in diesem Fall also durch Abstellen der Pumpe. Ein Herstellen von Verbindungen zu den anderen wasserführenden Teilen der Anlage geschieht durch Einschalten der Pumpe.

Die Reinigungsanlage als Ganzes umfasst also ein Hauptbecken und mindestens eine von diesem Hauptbecken abgetrennte Filterkammer sowie Mittel zur Erzielung einer Flüssigkeitszirkulation vom Hauptbecken in die mindestens eine Filterkammer und zurück. Vorzugsweise führen diese Zirkulationsmittel die Flüssigkeit direkt, das heisst ohne wesentliche Zwischenspeicher, vom Hauptbecken in die mindestens eine Filterkammer und ebenfalls direkt wieder zurück.

Mit dem Begriff "Wasser" oder "Schmutzwasser" wird in der vorliegenden Anmeldung jeweils Abwasser oder aufzubereitendes Trinkwasser bezeichnet. Grundsätzlich ist die Erfindung auch auf Filteranlagen für andere Flüssigkeiten anwendbar, die Vorteile der in situ Reinigung sind aber bei den bei der Wasseraufbereitung verwendeten grossen und schweren Filtern besonders ausgeprägt.

Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand eines bevorzugten Ausführungsbeispiels, welches in den beiliegenden Zeichnungen dargestellt ist, näher erläutert. Es zeigen:
- Figur 1: eine Seitenansicht parallel zu einer Drehachse; und
- Figur 2: eine Frontalansicht senkrecht zur einer Drehachse eines Rotationsfilters in einer erfindungsgemässen Filterkammer.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

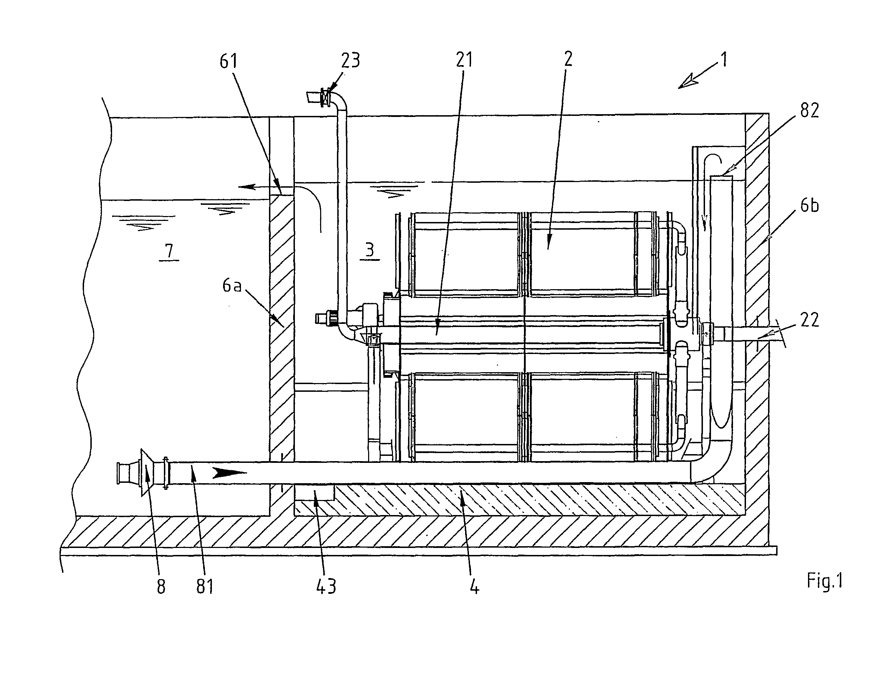

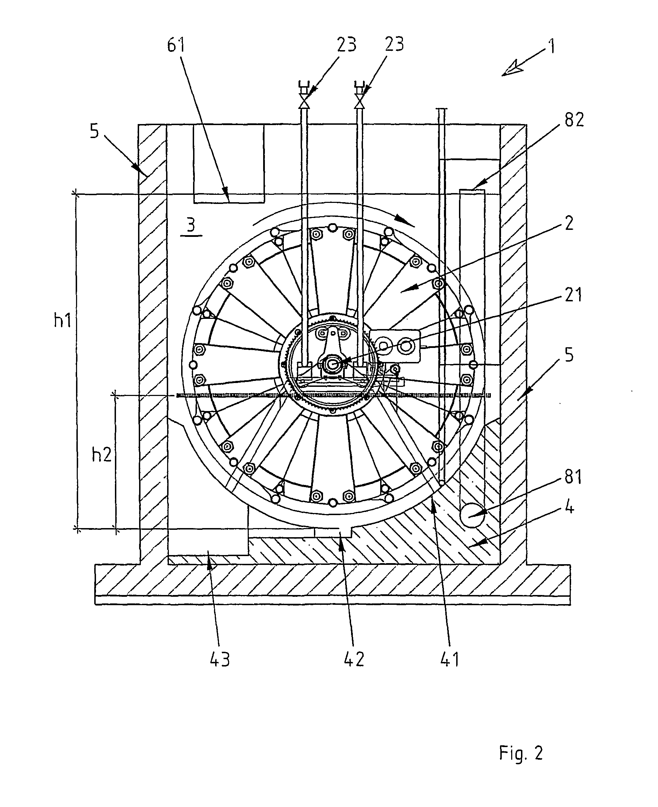

Die Figuren 1 und 2 zeigen eine Seitenansicht respektive eine Frontalansicht einer erfindungsgemässen Filtereinrichtung 1. Diese weist ein Rotationsfilter 2 auf, welches in einer Filterkammer 3 drehbar gelagert ist. Die Filterkammer 3 wird durch Seitenwände 5, eine erste Stirnwand 6a und eine zweite Stirnwand 6b sowie einen Boden 4, gebildet. Eine Oberfläche des Bodens 4 ist im wesentlichen in der Form eines halben Hohlzylinders 41 ausgebildet. Der Boden 4 weist eine Ablaufrinne 42 zum Entleeren der Filterkammer 3 und einen Pumpensumpf 43 auf. Das Rotationsfilter 2 ist um eine Drehachse 21 drehbar gelagert, an deren einem Ende eine Saugleitung für Permeat 22, das heisst gefiltertes Wasser, durch die zweite Stirnwand 6b geführt ist. Am anderen Ende weist die Drehachse 21 eine Spülluftzuführung 23 zum Einbringen von Luft zur Reinigung des Rotationsfilters 2 während eines Filterbetriebs auf.

Die Filterkammer 3 ist vorzugsweise angrenzend an ein Hauptbecken, beispielsweise einem Belebungsbecken 7 einer Kläranlage, angeordnet und von diesem durch beispielsweise die erste Stirnwand 6a getrennt. Ein oberer Rand der ersten Stirnwand 6a wirkt als Überlauf 61 von der Filterkammer 3 zum Belebungsbecken 7. Durch eine Rezirkulationspumpe 8 wird im Filterbetrieb der Filterkammer 3 Wasser aus einem Bodenbereich des Belebungsbeckens 7 durch eine Rezirkulationsleitung 81 und über einen Überlauf der Rezirkulationsleitung 82 in die Filterkammer 3 gepumpt. Eine Höhe des Überlaufs der Rezirkulationsleitung 82 ist grösser als eine Höhe des Überlaufs 61, so dass sich im Filterbetrieb ein zwischen diesen beiden Höhen liegender Wasserpegel h1 in der Filterkammer 3 einstellt.

Je nach herrschenden Platzverhältnissen kann die Filterkammer 3 auch in grösserem Abstand von dem Belebungsbecken 7 angeordnet sein, wobei an die Stelle des Überlaufs 61 eine Überlaufleitung tritt. In beiden Fällen ist das Belebungsbecken 7 bezüglich des zu reinigenden Wassers respektive eines Wasserkreislaufs abtrennbar mit der Filterkammer 3 verbunden.

In einer bevorzugten Ausführungsform der Erfindung beträgt ein Aussenradius des Rotationsfilters 2 ca. 170 cm und ein Innenradius des halben Hohlzylinders 41 ca. 180 cm. Ein Abstand zwischen dem Boden 4 respektive dem halben Hohlzylinder 41 und dem Rotationsfilter 2 entlang dessen Unterseite beträgt also beispielsweise 5 bis 20 cm, vorzugsweise annähernd 10 cm. Eine Breite der Filterkammer 3 ist möglichst klein gehalten und beträgt beispielsweise ebenfalls ca. zwei mal 5 bis 20 cm mehr als der Aussenradius des Rotationsfilters. Eine Länge des Rotationsfilters 2 beträgt ca. 500 cm, eine entsprechende Länge der Filterkammer 3 ca. 570 cm. Die Länge der Filterkammer 3 ist ebenfalls möglichst klein zu halten, um den Bedarf an Reinigungsflüssigkeit klein zu halten. Gleichzeitig muss aber ausreichend Raum für den Einbau und den Unterhalt aller in der Filterkammer 3 angeordneten Einrichtungen vorhanden sein.

In einem Normalbetrieb, also im Filterbetrieb der Filtereinrichtung 1 ist das Rotationsfilter 2 vollständig im zu filtrierenden Wasser eingetaucht. Ein Wasserspiegel h1 bezüglich eines tiefsten Punktes des halben Hohlzylinders 41 beträgt dabei ca. 380 cm. In einem Reinigungsbetrieb wird die Filterkammer 3 mit Reinigungsflüssigkeit gefüllt, so dass durch Drehen des Rotationsfilters 2 alle Filterelemente untergetaucht werden können. Dazu reicht es, wenn ein Spiegel der Reinigungsflüssigkeit etwas unter der Drehachse 21 liegt, beispielsweise auf einer Höhe h2 von ca. 150 cm.

### BEZUGSZEICHENLISTE

- 1: Filtereinrichtung
- 2: Rotationsfilter
- 21: Drehachse
- 22: Saugleitung für Permeat
- 23: Spülluftzuführung
- 3: Filterkammer
- 4: Boden
- 41: halber Hohlzylinder
- 42: Ablaufrinne
- 43: Pumpensumpf
- 5: Seitenwand
- 6a: erste Stirnwand
- 6b: zweite Stirnwand
- 61: Überlauf
- 7: Belebungsbecken, Hauptbecken
- 8: Rezirkulationspumpe
- 81: Rezirkulationsleitung
- 82: Überlauf der Rezirkulationsleitung

## Patentansprüche

1. Filtereinrichtung (1) in einer Wasseraufbereitungs- oder Abwasserreinigungsanlage, wobei die Filtereinrichtung (1) ein Becken zur Aufnahme von zu filterndem Wasser und ein darin angeordnetes im wesentlichen zylinderförmiges Rotationsfilter (2) mit einer horizontalen Drehachse (21) aufweist, wobei das Rotationsfilter (2) in einer eigenen Filterkammer (3) angeordnet ist und die Filterkammer (3) abtrennbar mit einem weiteren Becken (7) verbunden ist, **dadurch gekennzeichnet,**
**dass** ein Boden (4) der Filterkammer (3) einer Kontur des Rotationsfilters (2) folgend ausgebildet ist.

2. Filtereinrichtung (1) nach Anspruch 1, wobei der Boden (4) der Filterkammer (3) annähernd einen halben Hohlzylinder (41) bildet.

3. Filtereinrichtung (1) nach Anspruch 2, wobei die Drehachse (21) des Rotationsfilters (2) mindestens annähernd mit einer Zylinderachse des halben Hohlzylinders (41) zusammenfällt.

4. Filtereinrichtung (1) nach einem der vorherigen Ansprüche, wobei eine senkrecht zur Drehachse (21) des Rotationsfilters (2) verlaufende Stirnwand (6b) der Filterkammer (3) ein Mittel (22) zum Absaugen von Permeat aufweist.

5. Filtereinrichtung (1) nach einem der vorherigen Ansprüche, wobei die Filterkammer (3) mit einem Belebungsbecken (7) verbunden ist.

6. Filtereinrichtung (1) nach Anspruch 5, aufweisend eine Pumpe (8) zum Einbringen von Flüssigkeit aus dem weiteren Becken (7) über einen ersten Überlauf (82) in die Filterkammer (3), und einen tiefer liegenden zweiten Überlauf (61) zum Rückfluss der Flüssigkeit von der Filterkammer (3) in das weitere Becken (7) aufweist.

7. Filtereinrichtung (1) nach Anspruch 6, wobei die Filterkammer (3) angrenzend an das weitere Becken (7) angeordnet und durch eine Wand (6a) mit einem Überlauf (61) von diesem getrennt ist.

8. Filtereinrichtung (1) nach einem der vorherigen Ansprüche, wobei der Boden (4) der Filterkammer (3) Mittel (42) zur getrennten Entleerung der Filterkammer (3) ohne Entleerung des weiteren Beckens (7) aufweist.

9. Filtereinrichtung (1) nach einem der vorherigen Ansprüche, aufweisend zwei oder mehr Rotationsfilter (2), wobei jedes Rotationsfilter (2) jeweils in einer eigenen, zugeordneten Filterkammer (3) angeordnet ist.

10. Verfahren zur periodischen Reinigung einer Filtereinrichtung gemäss einem der Ansprüche 1 bis 8, **dadurch gekennzeichnet, dass** das Verfahren die folgenden Schritte aufweist:
- Abtrennen der Filterkammer (3) von anderen wasserführenden Teilen (7) der Anlage,
- Auspumpen oder Ablassen von in der Filterkammer (3) vorhandenem Wasser,
- Füllen der Filterkammer (3) mit Reinigungsflüssigkeit bis annähernd unterhalb die Drehachse (21) des Rotationsfilters (2),
- Drehen des Rotationsfilters (2),
- Auspumpen oder Ablassen der gebrauchten Reinigungsflüssigkeit,
- Wiederherstellen von Verbindungen zu den anderen wasserführenden Teilen der Anlage.

11. Verfahren gemäss Anspruch 10, wobei in einem Zwischenschritt das Rotationsfilter (2) für eine mechanische Grobreinigung in Drehung versetzt wird.

## Claims

1. Filter installation (1) in a water treatment - or sewage treatment plant, wherein the filter installation (1) comprises a basin for receiving water to be filtered and an essentially cylindrical rotating filter (2) arranged within it with a horizontal axis of rotation (21), wherein the rotating filter (2) is disposed in its own filter chamber (3) and the filter chamber (3) is separably connected with a further basin (7), **characterised in that** a bottom (4) of the filter chamber (3) is constructed as following a contour of the rotating filter (2).

2. Filter installation (1) in accordance with claim 1, wherein the bottom (4) of the filter chamber (3) approximately forms a half hollow cylinder (41).

3. Filter installation (1) in accordance with claim 2, wherein the axis of rotation (21) of the rotating filter (2) is at least approximately coincident with a cylinder axis of the half hollow cylinder (41).

4. Filter installation (1) in accordance with one of the preceding claims, wherein a front wall (6b) of the filter chamber (3) extending vertically to the axis of rotation (21) of the rotating filter (2) comprises a means (22) for the suction extraction of permeate.

5. Filter installation (1) in accordance with one of the preceding claims, wherein the filter chamber (3) is connected with an activated sludge basin (7).

6. Filter installation (1) in accordance with claim 5, comprising a pump (8) for the feeding in of water from a further basin (7) over a first spill-over (82) into the filter chamber (3), and a second spill-over (61) located lower for the backflow of the liquid from the filter chamber (3) into the further basin (7).

7. Filter installation (1) in accordance with claim 6, wherein the filter chamber (3) is arranged as adjacent to the further basin (7) and is separated from it by a wall (6a) with a spill-over (61).

8. Filter installation (1) in accordance with one of the preceding claims, wherein the bottom (4) of the filter chamber (3) comprises means (42) for the separate emptying of the filter chamber (3) without emptying the further basin (7).

9. Filter installation (1) in accordance with one of the preceding claims, comprising two or more rotating filters (2), wherein every rotating filter (2) is respectively arranged in its own, assigned filter chamber (3).

10. Method for the periodical cleaning of a filter installation in accordance with one of the claims 1 to 8, **characterised in that** the method comprises the following steps:
- Separating the filter chamber (3) from the other water carrying parts (7) of the installation,
- pumping out or draining of water present in the filter chamber (3),
- filling the filter chamber (3) with a cleaning liquid up to almost just below the axis of rotation (21) of the rotating filter (2),
- rotating the rotating filter (2),
- pumping out or draining the used cleaning liquid,
- re-establishing the connection with the other water carrying parts of the installation.

11. Method in accordance with claim 10, wherein in an intermediate step the rotating filter (2) for the purpose of a mechanical coarse cleaning is put into rotation.

## Revendications

1. Dispositif filtrant (1) dans une installation de préparation des eaux ou d'épuration des eaux usées, dans lequel :
- le dispositif filtrant (1) présente un bassin pour réceptionner de l'eau à filtrer et un filtre rotatif (2) agencé dedans et essentiellement de forme cylindrique, avec un axe de rotation horizontal (21) ; et
- le filtre rotatif (2) est agencé dans une propre chambre de filtre (3) et la chambre de filtre (3) est reliée avec possibilité de séparation à un autre bassin (7),
**caractérisé en ce qu'**un fond (4) de la propre chambre de filtre (3) est réalisé en suivant un contour du filtre rotatif (2).

2. Dispositif filtrant (1) selon la revendication 1, dans lequel le fond (4) de la chambre de filtre (3) forme approximativement un demi cylindre creux (41).

3. Dispositif filtrant (1) selon la revendication 2, dans lequel l'axe de rotation (21) du filtre rotatif (2) tombe au moins approximativement sur un axe du demi cylindre creux (41).

4. Dispositif filtrant (1) selon l'une des revendications précédentes, dans lequel une paroi frontale (6b) de la chambre de filtre (3), laquelle s'étend perpendiculairement à l'axe de rotation (21) du filtre rotatif (2), présente un moyen pour aspirer du perméat.

5. Dispositif filtrant (1) selon l'une des revendications précédentes, dans lequel la chambre de filtre (3) est reliée à un bassin de boues activées (7).

6. Dispositif filtrant (1) selon la revendication 5, présentant une pompe (8) pour amener du liquide depuis l'autre bassin (7) jusque dans la chambre de filtre (3) en passant par un premier trop-plein (82), et un second trop-plein (61) placé plus en profondeur pour faire revenir le liquide depuis la chambre de filtre (3) jusque dans l'autre bassin (7).

7. Dispositif filtrant (1) selon la revendication 6, dans lequel la chambre de filtre (3) est agencée en adjacence à l'autre bassin (7) et est séparée de celui-ci par une paroi (6a) comportant un trop-plein (61).

8. Dispositif filtrant (1) selon l'une des revendications précédentes, dans lequel le fond (4) de la chambre de filtre (3) présente un moyen (42) pour le vidage séparé de la chambre de filtre (3) sans vider l'autre bassin (7).

9. Dispositif filtrant (1) selon l'une des revendications précédentes, présentant deux filtres rotatifs (2) ou plus, dans lequel chaque filtre rotatif (2) est agencé respectivement dans une propre chambre de filtre correspondante (3).

10. Procédé pour le nettoyage périodique d'un dispositif filtrant conformément à l'une de revendications 1 à 8, **caractérisé en ce que** le procédé présente les étapes suivantes :
- séparation de la chambre de filtre (3) des autres parties (7) de l'installation qui conduisent l'eau ;
- pompage ou évacuation de l'eau qui est présente dans la chambre de filtre (3) ;
- remplissage de la chambre de filtre (3) avec du liquide de nettoyage, approximativement jusqu'en dessous de l'axe de rotation (21) du filtre rotatif (2) ;
- rotation du filtre rotatif (2) ;
- pompage ou évacuation du liquide de nettoyage utilisé ; et
- rétablissement des liaisons vers d'autres parties de l'installation qui conduisent l'eau.

11. Procédé selon la revendication 10, dans lequel le filtre rotatif (2) est mis en rotation pour un nettoyage mécanique grossier au cours d'une étape intermédiaire.
